# EUROPEAN PATENT APPLICATION

(11) **EP 0 697 606 A2**
(43) Date of publication of application: **21.02.1996**
(21) Application number: 95202976.7
(22) Date of filing: 21.05.1991
(51) Int. Cl.: G02B 6/24, G02B 6/26, G02B 6/30

(54) **Multi part optical fibre connectors**

(30) Priority: 22.05.1990 GB 9011424
(62) Divisional of application: 91304613.2
(71) Applicant: BICC Public Limited Company, London W1X 5FH (GB)
(72) Inventor: Longhurst, Philip C., Bunbury, Cheshire (GB)
(74) Representative: Dlugosz, Anthony Charles

(57) **Abstract**

An optical fibre connector-part (1) comprises a housing (2) in which an optical conductor extends between two oppositely disposed ends of the housing, at least one of which ends constitutes a plug or a socket. An integrated optical chip (6) is disposed within the housing and constitutes a part of the optical conductor. Preferably, the housing (2) is a moulded plastics body and the integrated optical chip (6) is at least partially encapsulated in the moulded plastics material. The connector-part provides for ready reconfiguration of modularised optical systems.

## Description

This invention relates to multi-part optical fibre connectors for detachably optically inter-connecting end-to-end at least two flexible optical guides each comprising at least one optical fibre. Such multi-part optical fibre connectors essentially comprise two separately formed connector-parts, each of which is adapted to be permanently or detachably secured to one of the flexible optical guides to be optically inter-connected, and may include at least one separately formed intermediate connector-part or adaptor for optically inter-connecting two separately formed connector parts. To facilitate detachable inter-connection of two separately formed optical fibre connector-parts, each connector part of a multi-part optical fibre connector constitutes at one or each of two oppositely disposed ends of the connector-part a plug or a socket adapted to effect a detachable plug and socket connection with a socket or a plug at an end of another connector-part. Multi-part optical fibre connectors of this kind are widely used in optical transmission systems.

It is an object of the present invention to provide, for use in a multi-part optical fibre connector of the aforesaid kind, an improved optical fibre connector-part which is of such a construction that an optical transmission system in which a multi-part optical fibre connector is inter-connected can be readily reconfigured or modified.

According to the invention, the improved optical fibre connector-part comprises a housing in which at least one optical conductor extends between two oppositely disposed ends of the housing, at least one of said two oppositely disposed ends of the housing constituting a plug or a socket, and at least one integrated optical chip disposed within the housing and constituting at least a part of the optical conductor or of at least one of the optical conductors extending between said oppositely disposed ends of the housing.

The housing of the improved connector-part preferably is a moulded body of plastics material and, in this case, preferably the or each integrated optical chip is at least partially encapsulated in the moulded plastics material of the housing.

Preferably, the integrated optical chip or at least one of the integrated optical chips of the improved optical fibre connector-part is so encapsulated in the plastics material of or is otherwise so disposed within the housing that the chip is intermediate of the oppositely disposed ends of the housing and is permanently optically inter-connected between end parts of the optical conductor or of at least one of the optical conductors of which it constitutes a part.

In some circumstances, the integrated optical chip or at least one of the integrated optical chips of the improved optical fibre connector-part may be so encapsulated in the plastics material of or may be otherwise so disposed within the housing that one side face of the chip is positioned at an end of the housing constituting a plug or socket and the chip is permanently optically connected to a part of the optical conductor or of at least one of the optical conductors extending to the other end of the housing.

In all cases, preferably the part or parts of the or each optical conductor of the improved optical fibre connector-part not constituted by the or an integrated optical chip is or are at least one optical fibre.

The or each integrated optical chip may be designed to effect any one of a plurality of fibre-optic functions included among which are:
(i) a tree coupler constituting a cascaded series of Y-junctions;
(ii) a star coupler incorporating a mixing region intermediate of a plurality of input points and a plurality of output points;
(iii) a wavelength division multiplexer;
(iv) a full-duplex wavelength division multiplexer;
(v) an attenuating device;
(vi) an optical filter;
(vii) a phase modulator;
(viii) an access coupler, and
(ix) an optical Wheatstone bridge.

This list of functions which the or an integrated optical chip of the improved optical fibre connector-part can serve is by no means exhaustive.

The or each integrated optical chip of the improved optical fibre connector-part may be a suitable integrated optical chip obtained from any source.

Where the improved optical fibre connector-part is to constitute one end part of a multi-part optical fibre connector, preferably one of the two oppositely disposed ends of the housing of the improved optical fibre connector-part constitutes a plug or a socket and the other of the two oppositely disposed ends is adapted to be permanently or detachably secured to an end of at least one flexible optical guide comprising at least one optical fibre in such a way that the or each optical fibre of the guide is optically connected to the or an optical conductor of the improved optical fibre connector-part or that the or each optical fibre of the guide extends into the housing of the improved optical fibre connector-part and constitutes a part of the or an optical conductor of the connector-part. The end of the housing constituting a plug or a socket may also constitute at least one additional plug or socket for effecting a plug and socket connection with a socket or plug at an end of a further optical fibre connector-part.

The or each flexible optical guide to which one end of an improved optical fibre connector-end part can be permanently or detachably secured may be an optical cable comprising a single optical fibre or comprising a plurality of optical fibres or it may be an optical fibre ribbon comprising a plurality of optical fibres arranged side-by-side with their axes lying in a substantially common plane.

Where the improved optical fibre connector-part is to constitute an intermediate part of a multi-part optical fibre connector, for example an adaptor for inter-connecting by plug and socket connections two end parts of a multi-part optical fibre connector, each of two oppositely disposed ends of the housing of said intermediate improved optical fibre connector-part will constitute a plug or a socket. The housing of the intermediate improved optical fibre connector-part may constitute at least one additional plug or socket for effecting a plug and socket connection with a socket or plug at an end of a further optical fibre connector-part. The additional plug or socket or at least one of the additional plugs or sockets of the intermediate improved optical fibre connector-part may be disposed at one of the two oppositely disposed ends of the housing of the connector-part or at a position intermediate of said two oppositely disposed ends.

It will be appreciated that the number of additional plugs or sockets constituted by the housing of the improved optical fibre connector-part will be determined by the function of the or each integrated optical chip disposed within the housing of the connector-part.

The invention also includes an improved multi-part optical fibre connector for detachably inter-connecting end-to-end at least two flexible optical guides each comprising at least one optical fibre, at least one of the connector-parts of the multi-part optical fibre connector being an improved optical fibre connector-part substantially as hereinbefore described.

The invention further includes a kit of parts for assembling an improved multi-part optical fibre connector as hereinbefore described, which kit of parts comprises at least two optical fibre connector-end parts each comprising a housing which at one of two oppositely disposed ends of the housing constitutes a plug or a socket and which at the other of said two oppositely disposed ends is adapted to be permanently or detachably secured to an end of at least one flexible optical guide comprising at least one optical fibre and at least one optical conductor disposed within and extending between said two oppositely disposed ends of the housing; and at least two adaptors for optically inter-connecting two end parts, each adaptor comprising a housing in which at least one optical conductor is disposed between two oppositely disposed ends of the housing, each constituting a plug or a socket, and in which at least one integrated optical chip is disposed and constitutes at least a part of said optical conductor or of at least one of said optical conductors, the integrated optical chip of each adaptor differing from the integrated optical chip of the other adaptor or of each of the other adaptors.

At least one of the optical fibre connector-end parts of the kit of parts may have at least one integrated optical chip disposed in its housing and constituting at least a part of the optical conductor or of one of the optical conductors extending between oppositely disposed ends of the housing.

The improved optical fibre connector-part and the improved optical fibre connector of the present invention have the important advantage that an optical transmission system of any desired configuration can be readily assembled using one or more than one improved optical fibre connector-part incorporating at least one integrated optical chip designed to effect a designed function and that an existing optical transmission system can be readily reconfigured or modified by replacing one or more than one improved optical fibre connector-part inter-connected in the system with one or more than one improved optical fibre connector-part of which the or each integrated optical chip is designed to effect a function differing from the function of the chip or chips of the connector-part being replaced.

The invention is further illustrated by a description, by way of example, of three preferred forms of multi-part optical fibre connector with reference to the accompanying diagrammatic drawings, in which:
- Figure 1: is an exploded diagrammatic representation of a preferred two-part optical fibre connector,
- Figure 2: is an exploded representation of one preferred form of three-part optical fibre connector, and
- Figure 3: is a partially exploded representation of a second preferred form of three-part optical fibre connector.

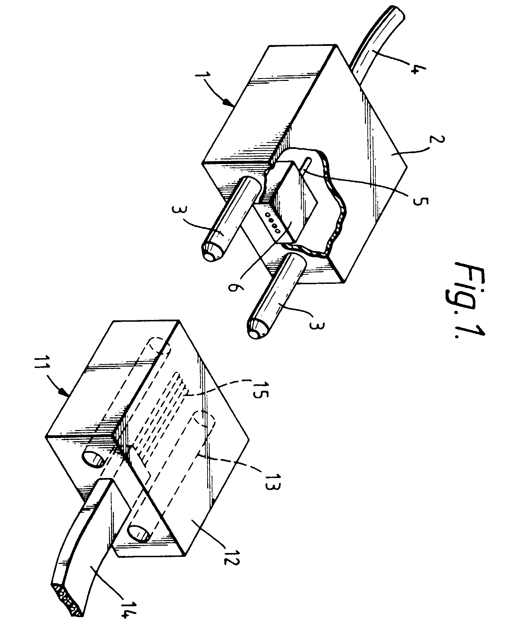

Referring to Figure 1, the preferred two-part optical fibre connector comprises an optical fibre connector-part 1 having protruding from one of two oppositely disposed ends of its moulded plastics body 2 a pair of transversely spaced parallel rigid pins 3 adapted to effect plug and socket connections in a pair of transversely spaced parallel holes 13 in one of two oppositely disposed ends of the moulded plastics body 12 of an optical fibre connector-part 11. Encapsulated in one of the two oppositely disposed ends of the moulded body 12 of the optical fibre connector-part 11 is an end of an optical fibre ribbon cable 14 from which protrude four optical fibres 15 which are centrally disposed between the transversely spaced holes 13 and which extend to the other of the oppositely disposed ends of the body with their axes lying in the same plane as the axes of the holes. Encapsulated in one of the two oppositely disposed ends of the moulded body 2 of the optical fibre connector-part 1 is an end of an optical cable 4 having a single optical fibre 5 and extending between the encapsulated end of the optical cable and the other of the oppositely disposed ends of the body is an optical conductor constituted in part by the optical fibre of the optical cable and in part by an integrated optical chip 6 which is optically connected to the optical fibre and which is so encapsulated in the plastics material of the body 2 that one side face of the chip is exposed and centrally disposed between the transversely spaced rigid pins 3. The integrated optical chip 6 functions as a tree coupler constituting a cascaded series of Y-junctions and in the exposed side face of the chip are exposed the end faces of four optical guides whose axes lie in the same plane as the axes of the rigid pins and which are so transversely spaced apart that, when a plug and socket connection is made between the optical fibre connector-parts 1 and 11, the end faces of the optical guides and the end faces of the optical fibres 15 abut to effect optical connections therebetween.

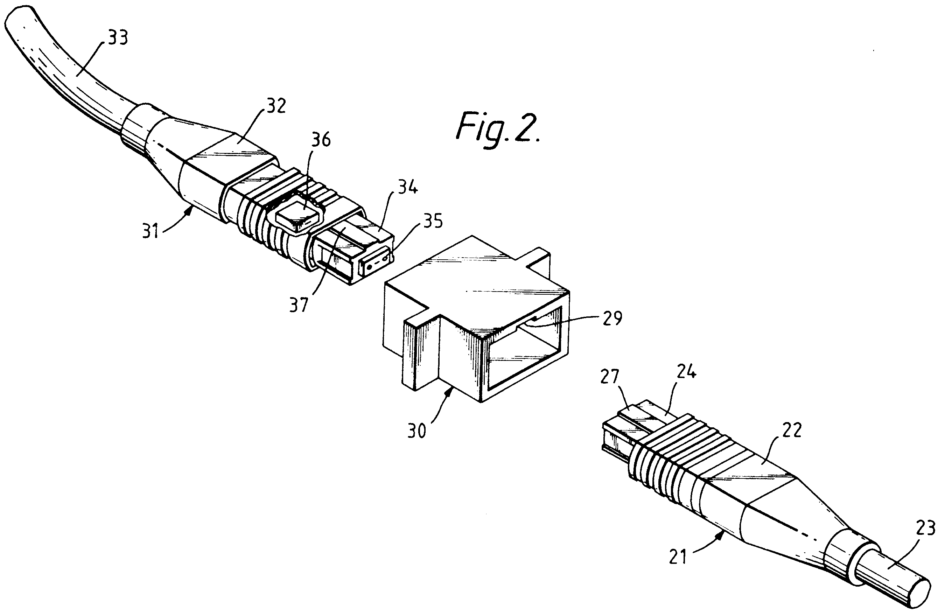

The first preferred form of three-part optical fibre connector shown in Figure 2 comprises an optical fibre connector-part 21, an optical fibre connector-part 31 and, adapted to optically interconnect the two optical fibre connector-end parts, a mating adaptor 30. The optical fibre connector-end part 21 comprises a moulded plastics body 22 in one of two oppositely disposed ends of which is encapsulated an end of a multifibre optical cable 23, the other end 24 of the moulded body constituting a plug. Encapsulated in the plug 24 of the optical fibre connector-end part 21 is a moulded array connector in an exposed end face of which are exposed the end faces of a plurality of optical fibres optically connected to the optical fibres of the optical cable 23. The axes of the exposed end faces of the optical fibres of the moulded array connector lie in a substantially common plane. The optical fibre connector-end part 31 comprises a moulded plastics body 32 having encapsulated in one of two oppositely disposed ends an end of an optical cable 33, the other of the oppositely disposed ends of the body constituting a plug 34. A moulded array connector 35 is so encapsulated in the plug 34 of the optical fibre connector-end part 31 that one end face of the moulded array connector is exposed. Extending between the optical fibres of the optical cable 33 and the encapsulated moulded array connector 35 are a plurality of optical conductors constituted in part by optical fibres and in part by an integrated optical chip 36 encapsulated in the moulded body 32 intermediate of its ends and permanently optically connected between the optical fibres constituting the optical conductors. The integrated optical chip 36 functions as a star coupler incorporating a mixing region intermediate of a plurality of input points and a plurality of output points. The end faces of the optical fibres extending from the integrated optical chip 36 are exposed at the end face of the moulded array connector 35 with their axes lying in a substantially common plane. The plugs 24 and 34 at the ends of the optical fibre connector-end parts 21 and 31 are adapted to effect plug and socket connections in sockets at the opposite ends of the mating adaptor 30. To this end, each of the plugs 24, 34 has a rib 27, 37 adapted to engage in a groove 29 in the mating adaptor 30, the arrangement being such that when the plugs 24, 34 are fully engaged in the mating adaptor the exposed end faces of the moulded array connectors 25, 35 abut with the exposed end faces of the optical fibres in axial alignment.

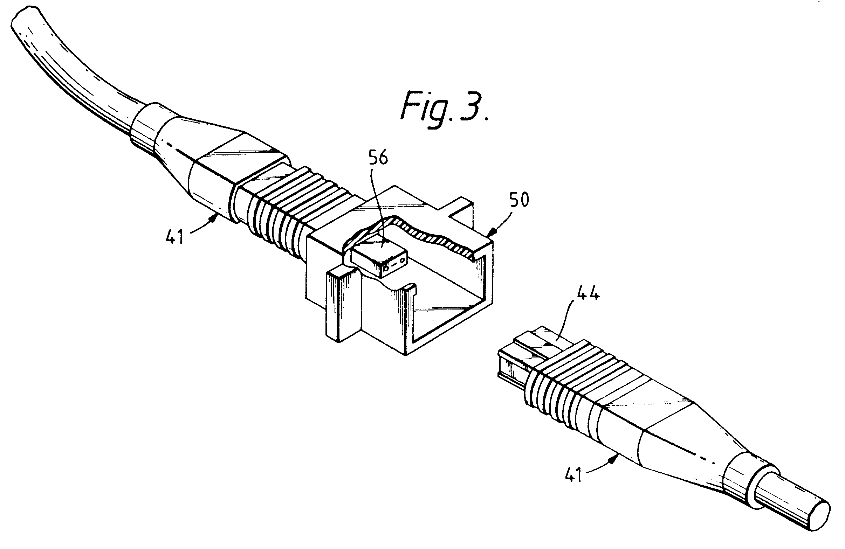

In the second preferred form of three-part optical fibre connector shown in Figure 3, each of the optical fibre connector-end parts 41 is of substantially the same construction as the optical fibre connector-end part 21 of the three-part optical fibre connector shown in Figure 2. In this case, however, the mating adaptor 50 has permanently disposed intermediate of oppositely disposed sockets of the adaptor adapted to effect plug and socket connections with the plugs 44 of the optical fibre connector end parts, an integrated optical chip 56 in each of two oppositely disposed end faces of which are exposed the end faces of a plurality of optical guides with the axes of the guides lying in a common plane. The integrated optical chip 56 may be designed to effect any one of the plurality of fibre-optic functions hereinbefore recited. The arrangement is such that, when the plugs 44 of the optical fibre connector-end parts 41 effect plug and socket connections in the sockets at the opposite ends of the mating adaptor 50, the exposed end faces of the moulded array connectors encapsulated in the plugs abut the oppositely disposed end faces of the integrated optical chip 56 with the end faces of the optical fibres of the moulded array connectors and the end faces of the optical guides of the integrated optical chip being in axial alignment.

## Claims

1. For use in a multi-part optical fibre connector, an optical fibre connector-part (1, 31, 50) comprising a housing (2, 32) in which at least one optical conductor (5) extends between two oppositely disposed ends of the housing, at least one of said two oppositely disposed ends of the housing constituting a plug or a socket (3, 34), and at least one integrated optical chip (6, 36, 56) disposed within the housing and constituting at least a part of the optical conductor or of at least one of the optical conductors extending between said oppositely disposed ends of the housing.

2. An optical fibre connector-part as claimed in Claim 1, wherein the housing is a moulded body of plastics material and the or each integrated optical chip is at least partially encapsulated in the moulded plastics material of the housing.

3. An optical fibre connector-part as claimed in Claim 1 or 2, wherein the integrated optical chip (36, 56) or at least one of the integrated optical chips is so encapsulated in the plastics material of or is otherwise so disposed within the housing that the chip is intermediate of the oppositely disposed ends of the housing and is permanently optically inter-connected between end parts of the optical conductor or of at least one of the optical conductors of which it constitutes a part.

4. An optical fibre connector-part as claimed in Claim 1 or 2, wherein the integrated optical chip (6) or at least one of the integrated optical chips is so encapsulated in the plastics material of or is otherwise so disposed within the housing (2) that one side face of the chip is positioned at an end of the housing constituting a plug or socket and is permanently optically connected to a part of the optical conductor (5) or of at least one of the optical conductors extending to the other end of the housing.

5. An optical fibre connector-part as claimed in any one of the preceding Claims, wherein the part or parts of the or each optical conductor not constituted by the or an integrated optical chip is or are at least one optical fibre.

6. An optical fibre connector-part as claimed in any one of the preceding Claims which is to constitute one end part of a multi-part optical fibre connector, wherein one of the two oppositely disposed ends of the housing constitutes a plug or a socket (3, 34) and the other of the two oppositely disposed ends is adapted to be permanently or detachably secured to an end of at least one flexible optical guide (4, 33) comprising at least one optical fibre in such a way that the or each optical fibre of the guide is optically connected to the or an optical conductor of the optical fibre connector-part or that the or each optical fibre of the guide extends into the housing and constitutes a part of the or an optical conductor of the connector-part.

7. An optical fibre connector-part as claimed in Claim 6, wherein the end of the housing constituting a plug or a socket also constitutes at least one additional plug or socket for effecting a plug and socket connection with a socket or plug at an end of a further optical fibre connector-part.

8. An optical fibre connector-part as claimed in any one of Claims 1 to 5 which is to constitute the end part of a multi-part optical fibre connector, wherein one of the two oppositely disposed ends of the housing constitutes a plug or a socket (3, 34) and the other of the two oppositely disposed ends is permanently or detachably secured to an end of, at least one flexible optical cable (4, 33) comprising a single optical fibre or comprising a plurality of, optical fibres, or to an end of an optical fibre ribbon comprising a plurality of optical fibres arranged side-by-side with their axes lying in a substantially common plane, in such a way that the or each optical fibre is optically connected to the or an optical conductor of the optical fibre connector-part or that the or each optical fibre extends into the housing and constitutes a part of the or an optical conductor of the connector-part.

9. An optical fibre connector-part as claimed in any one of Claims 1 to 5 which is to constitute an intermediate part of a multi-part optical fibre connector, wherein each of two oppositely disposed ends of the housing of the optical fibre connector-part constitutes a plug or a socket.

10. An optical fibre connector-part as claimed in Claim 9, wherein the housing of the intermediate optical fibre connector-part constitutes at least one additional plug or socket for effecting a plug and socket connection with a socket or plug at an end of a further optical fibre connector-part.

11. An optical fibre connector-part as claimed in Claim 10, wherein the additional plug or socket or at least one of the additional plugs or sockets of the intermediate optical fibre connector-part is disposed at one of the two oppositely disposed ends of the housing or at a position intermediate of said two oppositely disposed ends.

12. A multi-part optical fibre connector for detachably inter-connecting end-to-end at least two flexible optical guides each comprising at least one optical fibre, wherein at least one of the connector-parts of the multi-part optical fibre connector is an optical fibre connector-part as claimed in any one of the preceding Claims.

13. A kit of parts for assembling a multi-part optical fibre connector, which kit of parts comprises at least two optical fibre connector-end parts each comprising a housing which at one of two oppositely disposed ends of the housing constitutes a plug or a socket and which at the other of said two oppositely disposed ends is adapted to be permanently or detachably secured to an end of at least one flexible optical guide comprising at least one optical fibre and at least one optical conductor disposed within and extending between said two oppositely disposed ends of the housing; and at least two adaptors for optically inter-connecting two end parts, each adaptor comprising a housing in which at least one optical conductor is disposed between two oppositely disposed ends of the housing, each constituting a plug or a socket, and in which at least one integrated optical chip is disposed and constitutes at least a part of said optical conductor or of at least one of said optical conductors, the integrated optical chip of each adaptor differing from the integrated optical chip of the other adaptor or of each of the other adaptors.

14. A kit of parts as claimed in Claim 13, wherein at least one of the optical, fibre connector-end parts has at least one integrated optical chip disposed in its housing and constituting at least a part of the optical conductor or of one of the optical conductors extending between oppositely disposed ends of the housing.
